Europäisches Patentamt

European Patent Office

Office européen des brevets

(19)

(11) Veröffentlichungsnummer: **0 221 403**
**A2**

(12) **EUROPÄISCHE PATENTANMELDUNG**

(21) Anmeldenummer: **86114187.7**

(22) Anmeldetag: **14.10.86**

(51) Int. Cl.4: **B01D 53/34**

(30) Priorität: **28.10.85 DE 3538272**

(43) Veröffentlichungstag der Anmeldung:
**13.05.87 Patentblatt 87/20**

(84) Benannte Vertragsstaaten:
**AT BE CH DE ES FR GB GR IT LI LU NL SE**

(71) Anmelder: **Badenwerk AG**
**Badenwerkstrasse 2**
**D-7500 Karlsruhe 1(DE)**

(72) Erfinder: **Wittig, Sigmar, Prof, Dr.-Ing.**
**Hooverstrasse 27**
**D-7500 Karlsruhe 41(DE)**
Erfinder: **Voos, Helmut, Dr.-Ing.**
**Luisenstrasse 10**
**D-5270 Gummersbach(DE)**
Erfinder: **Schikarski, Wolfgang, Prof. Dr. rer.**
**nat.**
**Elbingerstrasse 34d**
**D-7500 Karlsruhe 1(DE)**
Erfinder: **Hässler, Günther, Dr.-Ing.**
**Georg-Friedrich-Händelstrasse 7**
**D-7505 Ettlingen 4(DE)**

(74) Vertreter: **Moser, Herbert, Dr.-Ing.**
**Nowackanlage 15**
**D-7500 Karlsruhe(DE)**

(54) **Verfahren zur Abscheidung von gasförmigen Verunreinigungen aus Rauchgasen und Vorrichtung hierzu.**

(57) Ein Verfahren zur Abscheidung von gasförmigen Verunreinigungen, insbesondere von Schwefeldioxid ($SO_2$) und Stickoxiden ($NO_x$) aus Rauchgasen, welche in einer Reaktionskammer durch Strahleneinwirkung in Aerosole bzw. in pulverförmige Partikel umgewandelt und ausgeschieden werden, soll hinsichtlich seiner Verfahrensökonomie verbessert werden. Dies wird erfindungsgemäß dadurch erreicht, daß aus den Rauchgasen in einer ersten Verfahrensstufe überwiegend Schwefeldioxid ($SO_2$) naßchemisch abgeschieden wird, daß die Rauchgase dabei angefeuchtet und auf einen festgelegten Feuchtigkeitsgehalt sowie auf eine festgelegte Eingangstemperatur der zweiten Verfahrensstufe abgekühlt werden, und daß in der nachfolgenden zweiten Verfahrensstufe die überwiegende Abscheidung der Stickoxide - ($NO_x$) unter Einwirkung einer Elektronenstrahlung erfolgt, wobei die Strömungsgeschwindigkeit in der zweiten Verfahrensstufe oberhalb von 10m/sec. liegt.

Fig 1

# Verfahren zur Abscheidung von gasförmigen Verunreinigungen aus Rauchgasen und Vorrichtung hierzu

Die Erfindung betrifft ein Verfahren zur Abscheidung von gasförmigen Verunreinigungen, insbesondere Schwefeldioxid (SO₂) und Stickoxiden - (NO $_x$) aus Rauchgasen, welche in einer Reaktionskammer durch Strahlungseinwirkung in Aerosole bzw. in pulverförmige Partikel umgewandelt und ausgeschieden werden. Außerdem sind Vorrichtungen zur Durchführung des Verfahrens angegeben.

Ein Verfahren zur Beseitigung von Stickoxiden und Schwefeldioxid aus Abgasen ist in der DE-OS 24 01 316 beschrieben. Dabei werden Rauchgase in eine Reaktions kammer eingeleitet, und das Verhältnis von $NO_x$-Gehalt zu $SO_2$-Gehalt wird so eingestellt, daß es sich im Bereich von 0,1 bis 3,0 befindet. Während der Bewegung der Rauchgase durch die Reaktionskammer erfolgt die Einwirkung von ionisierender Strahlung oder von ultraviolettem Licht mittels einer in der Reaktionskammer angeordneten Strahlungsquelle. Dabei werden die gasförmigen NO $_x$ und $SO_2$ enthaltenden Bestandteile der Rauchgase in Nebel und/oder feste Partikel umgewandelt und mittels eines Nebel-oder Staubsammlers abgeschieden.

Die Abscheidung von $SO_2$ (auch $SO_x$) und $NO_x$ aus Rauchgasen bildet insbesondere für Großfeuerungsanlagen, beispielsweise kohle-bzw. ölbeheizte Kesselanlagen in Kraftwerken, ein wichtiges Problem, dem unter dem Gesichtspunkt der Verringerung der Umweltbelastung vorrangige Bedeutung zukommt. Den Betreibern von Großfeuerungsanlagen wird behördlich eine Einhaltung bestimmter Grenzwerte für $SO_2$ und $NO_x$ vorgeschrieben.

Das vorbekannte Verfahren, bei dem in einer Reaktionskammer unter der Einwirkung von Strahlungsquellen für ionisierende Strahlung eine Umwandlung der gasförmigen Bestandteile $SO_2$ und $NO_x$ und eine nachfolgende Abscheidung erzielt wird, ist bereits in verschiedenen Ausführungsformen technisch erprobt, und hinsichtlich verfahrenstechnischer und apparativer Einzelheiten durchgebildet worden (vgl. Badenwerk Fachberichte 1984/1, S. 25 und 26.)

Dabei hat es sich gezeigt, daß der Wirkungsgrad der Abscheidung von $NO_x$ (Denitrifikation) und der Wirkungsgrad der Abscheidung von $SO_x$ (Entschwefelung) u.a. durch die Reaktionstemperatur und durch die Gesamtdosis der von den Rauchgasen absorbierten Strahlungsenergie beeinflußt werden.

Durch die DE-OS 29 52 458 ist es ferner bekannt, die Wirksamkeit der Behandlung von Abgasen unter Bestrahlung durch Zugabe von Ammoniak dadurch zu erhöhen, daß die Reaktionstemperatur während der Behandlung zwischen 50 und 80°C gehalten wird.

Die Behandlung eines abströmenden Gases mit Elektronenstrahlen in einer Verzögerungskammer, welche die Einstellung der Geschwindigkeit des Gasstromes, und zwar im Wechsel zwischen Abbremsung und Beschleunigung ermöglicht, ist in der DE-OS 29 52 589 beschrieben. Durch eine solche Strömungsführung soll eine gleichmäßige Strahlungseinwirkung erreicht werden.

Zum Stande der Technik gehört ferner ein Verfahren und eine Vorrichtung zur Entschwefelung und Denitrierung von Rauchgasen durch Elektronenbestrahlung, das in der DE-OS 34 03 726 beschrieben ist. Dabei handelt es sich um eine Elektronenbestrahlung mit niederenergetischen Elektronen-Strahlungsquellen mit einer Beschleunigungsspannung für Elektronen von 250 keV. Durch die Verwendung dieser niederenergetischen Elektronen-Strahlungsquelle sollen die Möglichkeiten der Strahlungsabschirmung verbessert werden, so daß bereits einfache Abschirmmaßnahmen hinreichen, um die Röntgenstrahlung außerhalb der Bestrahlungsapparatur unterhalb der Nachweisgrenze abzusenken.

Die Erfindung geht von der Aufgabenstellung aus, ein Verfahren der eingangs genannten Art so auszubilden, daß die Abscheidung von $SO_2$ und $NO_x$ aus Rauchgasen im Großfeuerungsmaßstab mit möglichst geringem Aufwand an Strahlungsenergie ökonomisch ausgeführt werden kann. Die Abscheideprodukte sollen gefährdungsfrei anfallen und beispielsweise als Düngemittel unmittelbar marktfähig sein. Außerdem wird eine solche Verfahrensführung angestrebt, bei der sich eine Energieeinsparung hinsichtlich der Wiederaufheizung der Rauchgase auf die vorgeschriebene Schornsteintemperatur erreichen läßt.

Die Lösung dieser Aufgabenstellung wird darin gesehen, daß aus den Rauchgasen in einer ersten Verfahrensstufe überwiegend Schwefeldioxid (SO₂) naßchemisch abgeschieden wird, daß die Rauchgase dabei angefeuchtet und auf einen festgelegten Feuchtigkeitsgehalt sowie auf eine festgelegte Eingangstemperatur der zweiten Verfahrensstufe abgekühlt werden, und daß in der nachfolgenden zweiten Verfahrensstufe die überwiegende Abscheidung der Stickoxide (NO$_x$) unter Einwirkung einer Elektronenstrahlung erfolgt, wobei die Strömungsgeschwindigkeit in der zweiten Verfahrensstufe oberhalb von 10m/sec. liegt. Für die ökonomische Durchführung des Verfahrens im großtechnischen Maßstab sind eine genügende Strömungsgeschwindigkeit und eine mit technischen Mitteln leicht erzeugbare und anwendbare Strahlungsintensität besonders wesentlich.

Die absorbierte Strahlungsenergie kann dabei unterhalb der Dosis liegen, die für eine gemeinsame Abscheidung von Schwefeldioxid und Stickoxiden in einer Reaktionskammer bei höherem $SO_2$-Anteil erforderlich ist.

Besonders günstig erscheint dabei eine solche Verfahrensführung, bei der das Verhältnis von $NO_x$-Gehalt und $SO_2$-Gehalt vor der Einleitung in die zweite Verfahrensstufe oberhalb von 3,1, vorzugsweise oberhalb von 4 liegt. Dabei soll das Verhältnis der Volumenanteile betrachtet werden. Bei einem solchen Verfahren ist sichergestellt, daß vor dem Eingang in die zweite Verfahrensstufe die überwiegende Menge von $SO_2$ gegenüber $NO_x$ naßchemisch abgeschieden wird.

Ein Grundprinzip der Erfindung liegt somit darin, in der Reaktionskammer unter Strahlungseinwirkung schwerpunktmäßig die gasförmigen Verunreinigungen ($NO_x$) abzuscheiden, die sich dort mit einer relativ geringen Strahlungsdosis günstig abscheiden lassen, und dieser Verfahrensstufe eine naßchemische erste Verfahrensstufe vorzuschalten, in der überwiegend $SO_2$ abgeschieden wird. Die naßchemische Abscheidung von $SO_2$ ergibt wesentliche Vorteile für die Wirfschaftlichkeit des Verfahrensablaufs, nämlich dadurch, daß die Rauchgase in der ersten Verfahrensstufe in erwünschter Weise angefeuchtet und auf die festgelegte Eingangstemperatur der zweiten Verfahrensstufe abgekühlt werden, so daß sich aus der Verfahrensführung der ersten Verfahrensstufe in der zweiten Verfahrensstufe, in der Reaktionskammer, optimale Einwirkungsbedingungen für die Strahlung ergeben, bei denen mit relativ geringem Energieaufwand der Strahlungsenergie eine weitgehende Abscheidung der Stickoxide erreicht werden kann. Im Gegensatz zu dem vorbekannten Verfahren, bei dem Schwefeldioxid und Stickoxide im überwiegenden Anteil gemeinsam in der Reaktionskammer abgeschieden werden, benötigt dieses Verfahren nur einen wesentlichen geringeren Energieaufwand an Strahlungsenergie. Dies bedeutet die Verwendbarkeit bereits bekannter und erprobter Strahlungsquellen.

Günstige Betriebsbedingungen können dann erreicht werden, wenn die Rauchgase beim Austritt aus der ersten Verfahrensstufe auf eine Temperatur unter 70°C abgekühlt, und auf einen Feuchtigkeitsgehalt von mehr als 6 Gew.% $H_2O$ als optimale Eintrittsbedingungen für die in der zweiten Verfahrensstufe durchgeführte Elektronenstrahleinwirkung eingestellt sind.

Durch die Aufteilung der wesentlichen Abscheideanteile für $SO_2$ und $NO_x$ auf zwei Verfahrensstufen läßt sich in der zweiten Verfahrensstufe ein günstiges Abscheideergebnis mit einer Elektronenstrahlung bei einer Bestrahlungsdosis unterhalb von 1 Mrad. erzielen. In der zweiten Verfahrensstufe kann vorteilhaft eine niederenergetische Elektronenstrahlung aus einer einstufigen Beschleunigungsstrecke angewendet werden.

Zur Verbesserung der Abscheidewirkung kann nach der ersten Verfahrensstufe in bekannter Weise Ammoniak zugesetzt werden.

Ein weiterer Vorteil kann gegebenenfalls dadurch erzielt werden, daß die Rauchgase vor ihrem Austritt aus der zweiten Verfahrensstufe durch die Elektronenstrahlung und/oder durch die unter der Einwirkung der Strahlung ablaufenden Reaktionen zur Annäherung an die festgelegte Schornsteintemperatur aufgeheizt werden. Da die Reaktion in der Reaktionskammer erheblich exotherm abläuft, läßt sich die anfallende Prozeßwärme zur Aufheizung der Abgase ökonomisch verwerten.

Die Rauchgase können nach der zweiten Verfahrensstufe zweckmäßig durch einen trockenfilternden Abscheider von staubförmig anfallenden Abscheideprodukten gereinigt werden.

In Weiterbildung der Erfindung kann es zweckmäßig sein, die Abscheideprodukte aus der zweiten Verfahrensstufe über eine Verzögerungsstrecke und/oder eine Einrichtung zur Verstärkung der Koagulation der Aerosole derart zu leiten, daß eine wirksame Trockenabscheidung mit hohem Wirkungsgrad erreicht wird.

Eine zusätzliche Verbesserung der Abscheidung und insbesondere der angestrebten Trockenabscheidung kann dadurch erreicht werden, daß nach der zweiten Verfahrensstufe vor der Staubabscheidung pulverför miges inertes Material zur Bildung von Kondensationskeimen dosiert eingetragen wird. Hierzu erscheinen verschiedene pulverförmige Materialien, vorzugsweise Alkali- und/oder Erdalkalimetalle, bevorzugt in Form von Oxiden, Hydroxiden oder Carbonaten, ferner Phosphate, Harnstoff, Carbamite oder Zyanamide und/oder organische Stoffe - (Düngemittelinhaltsstoffe bzw. Spurennährstoffe) verwendbar. Im einzelnen richtet sich die Anwendung der Materialien nach der gegebenen Rauchgaszusammensetzung und dem gewünschten Trockenabscheidegrad. Die Partikelgröße soll dabei vorteilhaft unterhalb von 20 $\mu$m liegen.

Obwohl in der ersten Verfahrensstufe der überwiegende Anteil des $SO_2$ und soweit vorhanden auch des übrigen $SO_x$ naßchemisch abgeschieden werden soll, verbleibt ein gewisser Einstellbereich des $SO_2$-Gehaltes hinsichtlich der in die zweite Verfahrensstufe eingeleiteten Rauchgase. Dabei wird zweckmäßig eine solche Einstellung vorgenommen, bei der in der zweiten Verfahrensstufe ein als Feststoff trocken abscheidbares Abscheideprodukt entsteht.

In der Verfahrensführung erscheint es günstig, variable Abscheidegrade in den beiden Verfahrensstufen in Anpassung an den Anfall und die Zusammensetzung der Rauchgase derart vorzusehen und zu regeln, daß das Abscheideprodukt der zweiten Verfahrensstufe im wesentlichen lastunabhängig gleichbleibende Zusammensetzung aufweist.

In weiterer Ausgestaltung der Erfindung kann es zweckmäßig sein, die $SO_2$-Abscheidung in der ersten Verfahrensstufe so einzustellen, daß eine solche $SO_2$-Menge in die zweite Verfahrensstufe eintritt, bei der sich am Ausgang der zweiten Verfahrensstufe ein Abscheideprodukt mit nichtexplosiven Eigenschaften ergibt. Dadurch wird die Bildung explosionsgefährdender Ammoniumverbindungen vermieden.

Ein weiterer Vorteil kann bei geeigneten Verfahrensstoffen in der ersten Verfahrensstufe dadurch erreicht werden, daß das Abscheideprodukt aus der zweiten Verfahrensstufe einem Sprühabsorber zugeführt und mit einer wässrigen Waschlösung ausgewaschen wird.

Eine vorteilhafte Vorrichtung zur Durchführung des Verfahrens kann so aufgebaut sein, daß der Reaktionskammer ein Sprühabsorber vorgeschaltet und ein trockenfilternder Abscheider nachgeschaltet ist.

Eine andere gegebenenfalls zweckmäßige Vorrichtung zur Durchführung des Verfahrens kann in der Weise aufgebaut sein, daß vor der Reaktionskammer ein Sprühabsorber und ein Sprühtrockner angeordnet sind, welche mit je einer Zuführungsleitung für nicht entschwefeltes Rauchgas in Verbindung stehen und deren Auslaß in eine gemeinsame Abgabeleitung mündet, welche mit der Reaktionskammer verbunden ist, daß der Reaktions kammer ein weiterer Absorber nachgeschaltet ist, und daß der Auslaß für die ausgewaschene wässrige Waschlösung an diesem weiteren Absorber über eine Rückführungsleitung mit dem Sprühtrockner verbunden ist.

Bei einer derartigen vorteilhaften Gesamtanordnung kann außerdem ein Aufbau der Reaktionskammer in der Weise zweckmäßig sein, daß zwei gegenüberliegende Elektronen-Strahlungsquellen vorgesehen sind, wobei der Querschnitt der Reaktionskammer so gewählt ist, daß das durch Überlagerung der einzelnen Bestrahlungsfelder entstehende Gesamtfeld eine annähernd gleichförmige Verteilung der Dosisleistung im Hauptströmungsbereich des Querschnitts und damit eine möglichst gleichmäßige Umsetzung der Schadstoffe ergibt. Anstelle von zwei gegenüberliegenden Elektronen-Strahlungsquellen, wie sie in der Vorrichtung aus der DE-OS 34 03 726 vorhanden sind, lassen sich gegebenenfalls zweckmäßig auchmehrere Strahlungsquellen anbringen, deren Bestrahlungsfelder entsprechende Überlagerungszonen bilden.

Durch die Anwendung der Merkmale der Erfindung wird das bekannte Verfahren der Abscheidung von Schwefeldioxid und Stickoxiden unter Einwirkung von ionisierender Strahlung dadurch wesentlich verbessert, daß eine wirtschaftliche großtechnische Verfahrensführung mit relativ geringem Aufwand an Bestrahlungsenergie und günstiger Zusammensetzung des Abscheideproduktes erreicht wird. Das Abscheideprodukt kann bei entsprechen der Verfahrensführung unmittelbar als marktgängiges Düngemittel verwendet werden, wobei gegebenenfalls eine Pelletierung zu frei beweglichen Körnern mit geeignetem Durchmesser durchgeführt wird.

In der Zeichnung sind zwei Verfahrensfließbilder zur Erläuterung des erfindungsgemäßen Verfahrensablaufs dargestellt; es zeigen:

Fig. 1 eine Grundform des Verfahrens,

Fig. 2 eine modifizierte Ausführungsform des Verfahrens mit Naßwäsche nach der zweiten Verfahrensstufe.

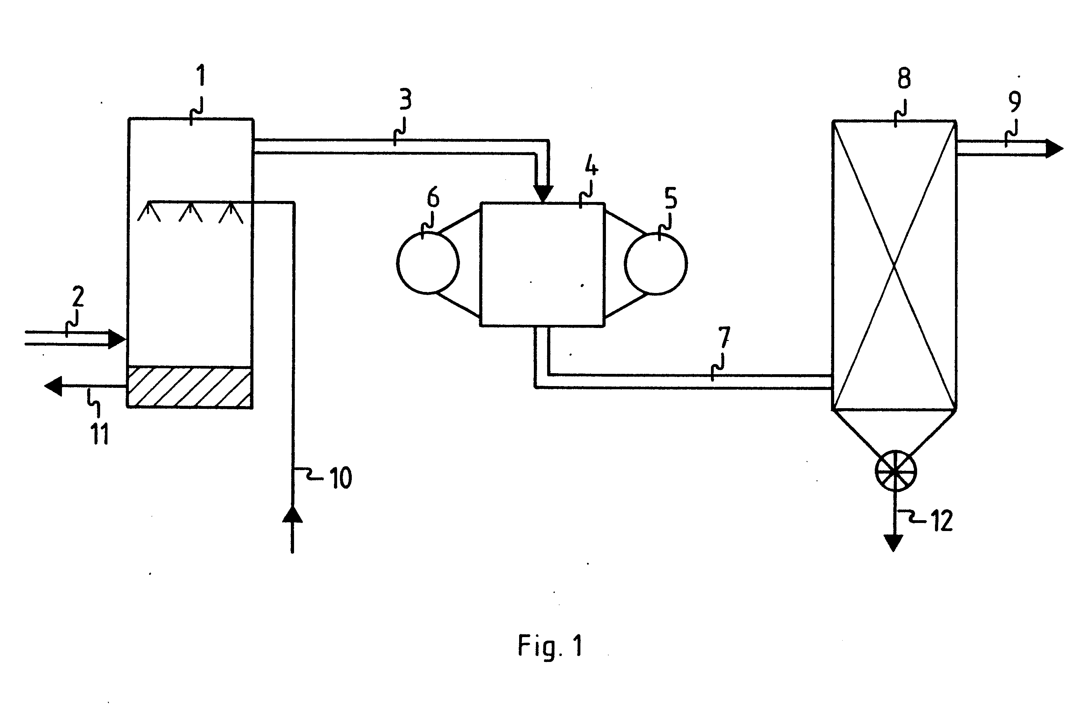

In Fig. 1 ist ein die erste Verfahrensstufe bildender Absorber 1 dargestellt, in dem die überwiegende $SO_2$-Abscheidung stattfindet. Diesem Sprühabsorber 1 wird über eine Zuführungsleitung 2 nichtentschwefeltes Rauchgas zugeführt. Das weitgehend entschwefelte Rauchgas gelangt über eine Abgabeleitung 3 in eine die zweite Verfahrensstufe bildende Reaktionskammer 4, an der zwei Elektronen-Strahlungsquellen 5,6 angeordnet sind. Der Auslaß der Reaktionskammer 4 führt über eine Ausgangsleitung 7 zu einem trockenfilternden Abscheider 8, dessen Auslaß mit einer Schornsteinabzugsleitung 9 verbunden ist und aus dem über eine Trockenproduktabzugsleitung 12 das anfallende Endprodukt -Ammoniumsulfatsalpeter-ausgetragen werden kann. Der Absorber 1 ist mit einer Waschmittelzuführungsleitung 10 und einem Waschmittelauslaß 11 versehen, welche an einen bekannten Waschkreislauf angeschlossen sind.

Im einzelnen ergibt sich folgender Verfahrensablauf: Dem Absorber 1 wird beispielsweise Rauchgas eines Kohlekraftwerks von 550 Megawatt-Leistung mit einer Eingabegröße von 1,7 Mio. m³/h zugeführt. Dieses Rauchgas enthält 630 ppm $SO_2$ sowie 415 ppm $NO_x$ und weist bei seinem Eintritt in den Absorber 1 eine Temperatur von etwa 130°C und eine Feuchtigkeit von etwa 3 Gew. % $H_2O$ auf.

Im Absorber 1 wird der überwiegende $SO_2$-Anteil abgeschieden, und die Rauchgase werden durch den Waschvorgang auf einen Feuchtigkeitsgehalt von etwa 8 Gew.% $H_2O$ angefeuchtet. In der

Abgabeleitung 3 beträgt der $SO_2$-Anteil nunmehr ca. 95 ppm, während der $NO_x$-Anteil im wesentlichen unverändert bei 415 ppm liegt. Das Verhältnis $NO_x/SO_2$ beträgt somit vor der zweiten Verfahrensstufe 4,4.

In der Reaktionskammer 4 werden überwiegend die gasförmigen $NO_x$-Bestandteile und die zusätzlich vorhandenen $SO_2$-Anteile zu Aerosolen koaguliert, welche im Rauchgas der Ausgangsleitung 7 zum trockenfilternden Abscheider 8 etwa folgende Konzentration aufweisen: Ca. 500 mg Ammoniumnitrat und ca. 1200 mg Ammoniumsulfatsalpeter pro m³ Rauchgas. Diese Aerosole werden nachfolgend im trockenfilternden Abscheider 8 vom Rauchgasstrom abgetrennt und bilden nach entsprechender Aufarbeitung einen marktfähigen Ammoniumdünger, welcher in einer Menge von etwa 2850 kg/h anfällt.

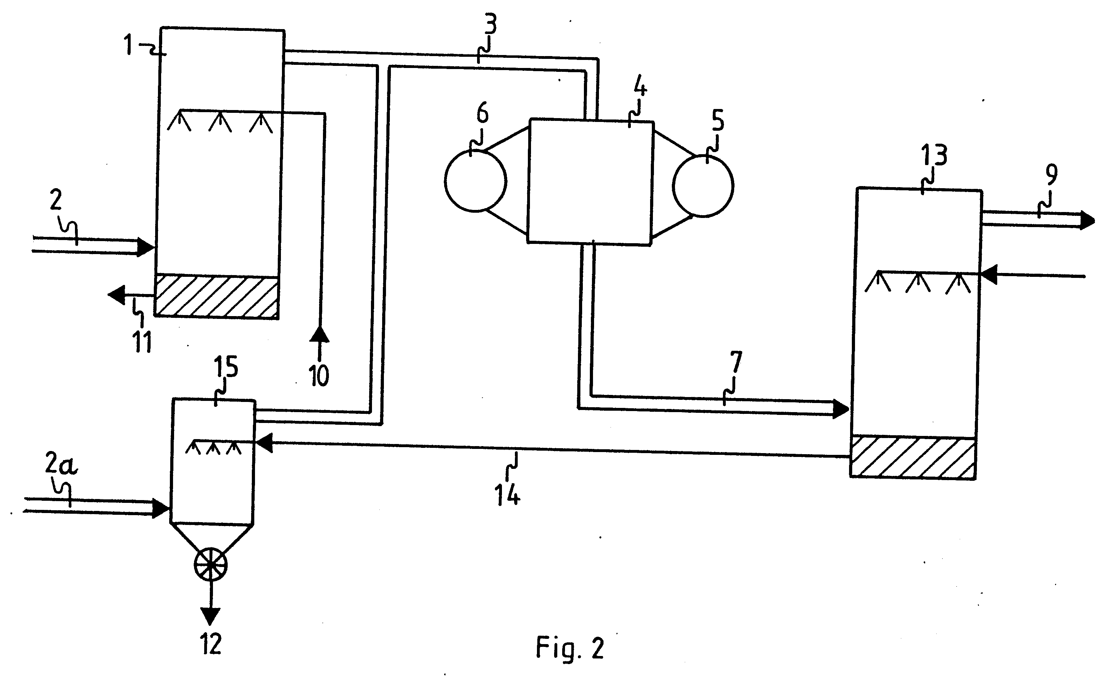

Bei der Weiterbildung der Verfahrensführung mit Naß wäsche nach der zweiten Verfahrensstufe ergibt sich folgende Erläuterung des Verfahrensflußbildes in Figur 2.

Dem Absorber 1 der ersten Verfahrensstufe ist ein Sprühtrockner 15 parallel geschaltet, und beiden wird über Zuführungsleitungen 2,2a nicht entschwefeltes Rauchgas unterschiedlicher Temperatur zugeführt. Während aus dem Absorber 1 weitgehend entschwefeltes Rauchgas austritt, wird der Teilstrom durch den Sprühtrockner 15 abgekühlt und beim Trocknungsvorgang angefeuchtet, ohne daß im wesentlichen eine Verminderung des $SO_2$-Gehaltes eintritt. Beide Rauchgasteilströme aus dem Absorber 1 und aus dem Sprühtrockner 15 werden in der Abgabeleitung 3 zusammengeführt und in die zweite Verfahrensstufe, d.h. in die Reaktionskammer 4 eingeleitet. An dieser Reaktionskammer 4 sind, wie in Fig. 1 beschrieben, jeweils zwei Elektronen-Strahlungsquellen 5,6 angeordnet. Der Auslaß der Reaktionskammer 4 führt über die Ausgangsleitung 7 zu einem Sprühabsorber 13, dessen Auslaß mit der Schornsteinabzugsleitung 9 verbunden ist.

Von dem Sprühabsorber 13 führt eine Rückführungsleitung 14 zu dem Sprühtrockner 15, so daß das wässrige Abscheideprodukt des Sprühabsorbers 13 in den Sprühtrockner 15 eingespeist wird. Aus dem Sprühtrockner 15 kann dann das getrocknete Endprodukt - Ammoniumsulfatsalpeter-ausgetragen werden.

Im einzelnen ergibt sich folgender Verfahrensablauf: Dem Absorber 1 werden beispielsweise 95 Vol.% des Rauchgasstromes von 1,7 Mio.m³/h zugeführt. Der rest liche Rauchgasstrom von 5 Vol.-% wird dem Sprühtrockner 15 zugeleitet. Beim Eintritt in den Absorber 1 bzw. in den Sprühtrockner 15 weist das Rauchgas eine Temperatur von ca.

130°C (Zuführungsleitung 2) bzw. von ca. 350°C (Zuführungsleitung 2a), sowie eine Feuchtigkeit von etwa 3Gew.% $H_2O$ auf und enthält 630ppm $SO_2$ sowie 415 ppm $NO_x$.

Im Absorber 1 wird aus dem ersten Teilstrom der $SO_2$-Anteil überwiegend abgeschieden, so daß am Austritt der $SO_2$-Gehalt auf ca. 95 ppm abgesenkt ist, während der $NO_x$-Gehalt nahezu unverändert bleibt.

Im Sprühtrockner 15 wird der zweite Teilstrom dazu benutzt, die mit dem Endprodukt beladene wässrige Waschlösung aus dem Sprühabsorber 13 einzudampfen. Dadurch ergibt sich am Auslaß des Sprühtrockners 15 eine abgesenkte Temperatur des zweiten Rauchgasteilstromes von etwa 200°C und eine erhöhte Feuchtigkeit von etwa 35 Gew.% $H_2O$, während die Menge an $NO_x$ und $SO_2$ im zweiten Rauchgasteilstrom nahezu unverändert bleibt.

Nach der Zusammenführung der beiden Teilströme in der gemeinsamen Abgabeleitung 3 beträgt der $SO_2$-Anteil nunmehr ca. 120 ppm, während der $NO_x$-Anteil weiterhin nahezu unverändert bei 415 ppm liegt. Das Verhältnis $NO_x/SO_2$ beträgt somit am Ausgang des Absorbers 1 vor der Beimischung des zweiten Teilstroms etwa 4,4, während am Eingang der zweiten Verfahrensstufe, d.h. im gemeinsamen Abgasstrom in der Abgabeleitung 3 ein $NO_x/SO_2$-Verhältnis vor dem Eingang in die zweite Verfahrensstufe von 3,5 vorliegt.

In der Reaktionskammer 4 werden überwiegend die $NO_x$-Bestandteile und zusätzlich die vorhandenen $SO_2$-Anteile zu Feststoffpartikeln kondensiert, welche mit dem Rauchgas durch die Ausgangsleitung 7 in den Sprühabsorber 13 geleitet und dort durch die zugeführte Waschlösung ausgewaschen werden. Die Waschlösung besteht im wesentlichen aus etwa 9 t Frischwasser pro Stunde.

Aus dem Flüssigkeitssumpf des Sprühabsorbers 13 werden $NH_4(NO_3)$ + $(NH_4)_2(SO_4)$ + $H_2O$ über die Rückführungsleitung 14 in den Sprühtrockner 15 zurückgeführt und dort durch den Wärmeinhalt des zugeführten Rauchgasteilstromes getrocknet, so daß an der Produktabzugsleitung 12 ca. 3 t des gewünschten Trockenproduktes -Ammoniumsulfatsalpeter-pro Stunde mit einem Ammoniumnitratanteil von ca. 60 Gew.% abgezogen werden können.

**Ansprüche**

1. Verfahren zur Abscheidung von gasförmigen Verunreinigungen, insbesondere von Schwefeldioxid ($SO_2$) und Stickoxiden ($NO_x$) aus Rauchgasen, welche in einer Reaktionskammer durch Strahleneinwirkung in Aerosole bzw. in pulverförmige Partikel umgewandelt und ausgeschieden werden, **dadurch gekennzeichnet** , daß aus den Rauchgasen in einer ersten Verfahrensstufe überwiegend Schwefeldioxid (SO₂) naßchemisch abgeschieden wird, daß die Rauchgase dabei angefeuchtet und auf einen festgelegten Feuchtigkeitsgehalt sowie auf eine festgelegte Eingangstemperatur der zweiten Verfahrensstufe abgekühlt werden, und daß in der nachfolgenden zweiten Verfahrensstufe die überwiegende Abscheidung der Stickoxide (NOₓ) unter Einwirkung einer Elektronenstrahlung erfolgt, wobei die Strömungsgeschwindigkeit in der zweiten Verfahrensstufe oberhalb von 10 m/sec. liegt.

2. Verfahren nach Anspruch 1, **dadurch gekennzeichnet**, daß das Verhältnis von NO ₓ-Gehalt und SO₂-Gehalt vor der Einleitung in die zweite Verfahrensstufe oberhalb von 3,1, vorzugsweise oberhalb von 4 liegt.

3. Verfahren nach Anspruch 1, **dadurch gekennzeichnet**, daß die Rauchgase beim Aus tritt aus der ersten Verfahrensstufe auf eine Temperatur unter 70 °C und auf einen Feuchtigkeitsgehalt von mehr als 6 Gew.% H₂O als optimale Eintrittsbedingungen für die in der zweiten Verfahrensstufe durchgeführte Elektronenstrahleinwirkung eingestellt sind.

4. Verfahren nach Anspruch 1, **dadurch gekennzeichnet** , daß in der zweiten Verfahrensstufe eine Elektronenstrahlung mit einer Bestrahlungsdosis unterhalb von 1 Mrad angewendet wird.

5. Verfahren nach Anspruch 1, **dadurch gekennzeichnet**, daß in der zweiten Verfahrensstufe eine niederenergetische Elektronenstrahlung aus einer einstufigen Beschleunigungsstrecke angewendet wird.

6. Verfahren nach Anspruch 1, **dadurch gekennzeichnet**, daß im Verfahrensablauf hinter der ersten Verfahrensstufe Ammoniak zugesetzt wird.

7. Verfahren nach Anspruch 1, **dadurch gekennzeichnet**, daß die Rauchgase vor ihrem Austritt aus der zweiten Verfahrensstufe durch die Elektronenstrahlung und/oder durch die unter der Einwirkung der Strahlung ablaufenden Reaktionen zur Annäherung an die festgelegte Schornsteintemperatur aufgeheizt werden.

8. Verfahren nach Anspruch 1, **dadurch gekennzeichnet**, daß die Rauchgase nach der zweiten Verfahrensstufe durch einen trockenfilternden Abscheider von Produktstäuben gereinigt werden.

9. Verfahren nach Anspruch 8, **dadurch gekennzeichnet**, daß die Abscheideprodukte aus der zweiten Verfahrensstufe über eine Verzögerungsstrecke und/oder eine Einrichtung zur Verstärkung der Koagulation der Aerosole derart geleitet werden, daß eine wirksame Trockenabscheidung erreicht wird.

10. Verfahren nach Anspruch 8, **dadurch gekennzeichnet**, daß nach der zweiten Verfahrensstufe vor der Staubabscheidung pulverförmiges inertes Material zur Bildung von Kondensationskeimen dosiert eingetragen wird.

11. Verfahren nach Anspruch 8, **dadurch gekennzeichnet**, daß der SO₂-Gehalt in den der zweiten Verfahrensstufe zugeführten Rauchgasen so eingestellt wird, daß in der zweiten Verfahrensstufe ein als Feststoff abscheidbares Abscheideprodukt entsteht.

12. Verfahren nach Anspruch 8, **dadurch gekennzeichnet**, daß die Abscheidegrade in der ersten und zweiten Verfahrensstufe derart an den Anfall und die Zusammensetzung der Rauchgase angepaßt werden, daß das Abscheideprodukt der zweiten Verfahrensstufe im wesentlichen lastunabhängig gleichbleibende Zusammensetzung aufweist.

13. Verfahren nach Anspruch 8, **dadurch gekennzeichnet**, daß die SO₂-Abscheidung in der ersten Verfahrensstufe so eingestellt wird, daß eine solche SO₂-Menge in die zweite Verfahrensstufe eintritt, bei der sich am Ausgang der zweiten Verfahrensstufe ein Abscheideprodukt mit nichtexplosiven Eigenschaften ergibt.

14. Verfahren nach Anspruch 1, **dadurch gekennzeichnet** , daß das Abscheideprodukt aus der zweiten Verfahrensstufe einem Sprühabsorber zugeführt und mit einer Waschflüssigkeit ausgewaschen wird.

15. Vorrichtung zur Durchführung des Verfahrens, insbesondere nach Anspruch 1, **dadurch gekennzeichnet**, daß der Reaktionskammer (4) ein Sprühabsorber (1) vorgeschaltet und ein trockenfilternder Abscheider (8) nachgeschaltet ist.

16. Vorrichtung zur Durchführung des Verfahrens, insbesondere nach Anspruch 1, **dadurch gekennzeichnet**, daß vor der Reaktionskammer (4) ein Sprühabsorber (1) und ein Sprühtrockner (15) angeordnet sind, welche mit Zuführungsleitungen (2,2a) für nicht entschwefeltes Rauchgas in Verbindung stehen und deren Auslaß in eine gemeinsame Abgabeleitung (3) mündet, welche mit der Reaktionskammer (4) verbunden ist, daß der Reaktionskammer (4) ein weiterer Absorber (13) nachgeschaltet ist, und daß der Auslaß für die ausgewaschene wässrige Waschlösung an diesem weiteren Absorber (13) über eine Rückführungsleitung (14) mit dem Sprühtrockner (15) verbunden ist.

17. Vorrichtung zur Durchführung des Verfahrens nach einem der vorangehenden Ansprüche, **dadurch gekennzeichnet**, daß mindestens zwei gegenüberliegende Elektronenstrahlungsquellen vorgesehen sind, und daß der Querschnitt der Reaktionskammer so gewählt ist, daß das durch Überlagerung der einzelnen Bestrahlungsfelder entstehende Gesamtfeld eine annähernd gleichförmige Verteilung der Dosisleistung im Hauptströmungsbereich des Querschnitts ergibt.

Fig. 1

Fig. 2